(19) Europäisches Patentamt
European Patent Office
Office européen des brevets

(11) **EP 1 626 884 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(51) Int Cl.:
***B60T 7/12*** *(2006.01)*     ***B60T 7/10*** *(2006.01)*

(21) Anmeldenummer: **04733564.1**

(22) Anmeldetag: **18.05.2004**

(86) Internationale Anmeldenummer:
**PCT/EP2004/005361**

(87) Internationale Veröffentlichungsnummer:
**WO 2004/106131 (09.12.2004 Gazette 2004/50)**

(54) **VERFAHREN UND SYSTEM ZUR STEUERUNG EINES MIT EINER ELEKTRISCHEN PARKBREMSE AUSGESTATTETEN BREMSSYSTEMS**

METHOD AND SYSTEM FOR CONTROLLING A BRAKING SYSTEM EQUIPPED WITH AN ELECTRIC PARKING BRAKE

PROCEDE ET SYSTEME POUR COMMANDER UN SYSTEME DE FREINAGE EQUIPE D'UN FREIN DE STATIONNEMENT ELECTRIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.05.2003 DE 10324446**

(43) Veröffentlichungstag der Anmeldung:
**22.02.2006 Patentblatt 2006/08**

(73) Patentinhaber: **Lucas Automotive GmbH 56070 Koblenz (DE)**

(72) Erfinder: **KINDER, Ralf 56337 Eitelborn (DE)**

(74) Vertreter: **Röthinger, Rainer Wuesthoff & Wuesthoff Patent- und Rechtsanwälte Schweigerstrasse 2 81541 München (DE)**

(56) Entgegenhaltungen:
**EP-A- 1 008 503     EP-A- 1 300 307
DE-A- 4 218 717     GB-A- 2 376 990**

## Beschreibung

Die Erfindung betrifft ein Verfahren und ein System zur Steuerung eines mit einer elektrischen Parkbremse (EPB) ausgestatteten Bremssystems für ein Kraftfahrzeug.

Zur Erhöhung des Fahrkomforts ist es bekannt, moderne, mit einer elektrischen Parkbremse ausgestattete Bremssysteme derart zu steuern, dass neben einer manuellen Betätigung auch eine automatische Aktivierung bzw. Deaktivierung der elektrischen Parkbremse möglich ist. Die EPB wird z. B. automatisch aktiviert, sobald sich das Fahrzeug im Stillstand befindet und automatisch wieder gelöst, sobald ein Anfahrvorgang des Fahrzeugs erkannt wird. Die Erkennung des Anfahrvorgangs erfolgt beispielsweise anhand der Erfassung einer Betätigung des Gaspedals durch den Fahrer.

Beim automatischen Lösen der elektrischen Parkbremse in Reaktion auf die Erkennung eines Anfahrvorgangs besteht jedoch insbesondere bei schnellen Anfahrvorgängen eines mit einem Schaltgetriebe ausgestatteten Fahrzeugs das Problem, dass die elektrische Parkbremse bedingt durch ihre Reaktionszeit vom Beginn ihrer Deaktivierung bis zum vollständigen Abbau der Bremskräfte nicht schnell genug vollständig gelöst werden kann, um ein ungehindertes Anfahren des Fahrzeugs zu ermöglichen. Infolge der von der EPB aufgebrachten Bremskräfte, die zu diesem Zeitpunkt noch nicht vollständig abgebaut sind, ist beim Anfahren des Fahrzeugs für den Fahrer ein unangenehmer Ruck an der Hinterachse des Fahrzeugs spürbar.

Dokument GB 2 376 990 A offenbart ein Verfahren bzw. ein System gemäß dem Oberbegriff des Anspruchs 1 bzw. 9.

Der Erfindung liegt die Aufgabe zugrunde, ein Verfahren und ein System zur Steuerung eines mit einer elektrischen Parkbremse ausgestatteten Bremssystems zur Verfügung zu stellen, die auch bei schnellen Anfahrvorgängen eines mit einem Schaltgetriebe ausgestatteten Fahrzeugs ein für den Fahrer komfortables, ruckfreies Anfahren ermöglichen.

Diese Aufgabe wird durch ein Steuerungsverfahren mit den im beigefügten Patentanspruch 1 angeführten Merkmalen sowie ein Steuerungssystem mit den im beigefügten Patentanspruch 9 angeführten Merkmalen gelöst. Bei diesem Verfahren bzw. System wird die elektrische Parkbremse in Reaktion auf die Erkennung eines Anfahrvorgangs gelöst, wobei erfindungsgemäß ein Lösezeitpunkt der elektrischen Parkbremse in Abhängigkeit mindestens eines gemessenen Parameters eines Einkuppelvorgangs festgelegt wird. Im Vergleich zu einem Verfahren bzw. System, bei dem die elektrische Parkbremse beispielsweise ausschließlich in Abhängigkeit einer Gaspedalbetätigung durch einen Fahrer gelöst wird, ermöglicht das erfindungsgemäße Verfahren bzw. System insbesondere bei einem mit einem Schaltgetriebe ausgestatteten Fahrzeug eine genauere Abstimmung der Deaktivierung der elektrischen Parkbremse auf den Einkuppelvorgang und damit auf den Anfahrvorgang des Fahrzeugs.

Bei dem erfindungsgemäßen Verfahren bzw. System wird der Einkuppelvorgang zweckmäßigerweise mit Hilfe geeigneter Messvorrichtungen überwacht. Beispielsweise kann der Beginn des Einkuppelvorgangs oder weitere, den Verlauf des Einkuppelvorgangs charakterisierende Parameter, wie die Einkuppelgeschwindigkeit, mittels geeigneter Sensoren erfasst und der Lösezeitpunkt der EPB dann in Reaktion auf den oder die von den Sensoren erfassten Parameter des Einkuppelvorgangs festgelegt werden. Dabei kann bei der Festlegung eines geeigneten Lösezeitpunkts der elektrischen Parkbremse auch die Reaktionszeit der EPB, d. h. die Zeit, die für einen vollständigen Abbau der von der EPB aufgebrachten Bremskräfte erforderlich ist, berücksichtigt werden. Die geeignete Wahl des Lösezeitpunkt der EPB in Abhängigkeit der erfassten Parameter des Einkuppelvorgangs ermöglicht ein für den Fahrer komfortables, ruckfreies Anfahren des Fahrzeugs.

Erfindungsgemäß wird eine erste Zeitspanne vom Beginn des Einkuppelvorgangs bis zu einem Kupplungsansprechzeitpunkt durch Schätzen, Messen, Abrufen eines gespeicherten Wertes, etc., ermittelt. Der Lösezeitpunkt der elektrischen Parkbremse wird dann so gewählt, dass er um eine zweite Zeitspanne vor dem Kupplungsansprechzeitpunkt liegt. Die Zeitspanne wird vom Beginn des Einkuppelvorgangs bis zum Kupplungsansprechzeitpunkt, d.h. dem Zeitpunkt, ab dem eine Kraftübertragung von der Kupplung auf die angetriebenen Achse stattfindet und das Anfahren des Fahrzeugs ermöglicht, für den Abbau der von der elektrischen Parkbremse aufgebrachten Bremskräfte genutzt. Dadurch kann sichergestellt werden, dass die elektrische Parkbremse beim Ansprechen der Kupplung vollständig gelöst ist, wodurch ein ungehindertes, komfortables und ruckfreies Anfahren auch bei schnellen Anfahrvorgängen ermöglicht wird.

Die zweite, gegebenenfalls vorbestimmte Zeitspanne, um die der Lösezeitpunkt der elektrischen Parkbremse vor dem Kupplungsansprechzeitpunkt liegt, kann ca. 200 bis 600 ms betragen und vorteilhafterweise ca. 400 ms. Falls die zweite Zeitspanne der üblichen Reaktionszeit einer elektrischen Parkbremse entspricht, kann auf einfache Art und Weise sichergestellt werden, dass die von der EPB aufgebrachten Bremskräfte beim Ansprechen der Kupplung und somit beim Anfahren des Fahrzeugs vollständig abgebaut sind.

Vorzugsweise erfolgt die Erkennung des Kupplungsansprechzeitpunkts durch die Erfassung einer Änderung der Motordrehzahl oder des Motordrehmoments oder durch die Erfassung einer Änderung der Beschleunigung des Fahrzeugs. Im Kupplungsansprechzeitpunkt erfahren die oben genannten Motordaten sowie die Beschleunigung des Fahrzeugs eine für diesen Zeitpunkt charakteristische Änderung. Die Erfassung dieser charakteristische Änderung kann daher für die Erkennung des Kupplungsansprechzeitpunkts genutzt werden.

Die Änderung der Motordrehzahl bzw. des Motordrehmoments kann durch einen Drehzahlsensor bzw. einen Drehmomentsensor und die Änderung der Beschleunigung des Fahrzeugs durch einen Beschleunigungssensor oder auf andere Weise erfasst werden. Derartige Sensoren sind in den meisten, mit einem modernen Bremssystem (z.B. EPB) ausgestatteten Kraftfahrzeuge ohnehin vorhanden, so dass zur Erfassung und/oder Auswertung dieser Daten keine zusätzlichen Vorrichtungen und/oder keine zusätzliche Software vorzusehen sind.

Bei einer weiteren bevorzugten Ausführungsform der Erfindung wird ein vom Beginn des Einkuppelvorgangs bis zum Kupplungsansprechzeitpunkt zurückzulegender Kupplungsweg erfasst und abgespeichert. Die erste Zeitspanne vom Beginn des Einkuppelvorgangs bis zum Kupplungsansprechzeitpunkt wird von der Einkuppelgeschwindigkeit und dem vom Beginn des Einkuppelvorgangs bis zum Kupplungsansprechzeitpunkt zurückzulegenden Kupplungsweg bestimmt. Die messtechnische Erfassung zumindest eines dieser Parameter, nämlich des Kupplungswegs, ermöglicht es daher, die erste Zeitspanne genauer zu bestimmen als dies z. B. durch eine bloße Abschätzung beider Parameter möglich wäre.

Vorzugsweise erfolgt die Erfassung und Speicherung des vom Beginn des Einkuppelvorgangs bis zum Kupplungsansprechzeitpunkt zurückzulegenden Kupplungswegs bei jedem Anfahrvorgang oder in bestimmten Intervallen. Da der bis zum Kupplungsansprechzeitpunkt zurückzulegende Kupplungsweg von der Temperatur und insbesondere vom Verschleiß der Kupplung abhängt, stellt die regelmäßige Erfassung des Kupplungswegs bei jedem Anfahrvorgang sicher, dass für die Bestimmung der ersten Zeitspanne stets aktuelle Kupplungswegwerte zur Verfügung stehen. Die bei jedem Anfahrvorgang erfassten Kupplungswegwerte können in einer geeigneten Speichereinrichtung, die beispielsweise mit einer elektronischen Steuereinheit verbunden sein kann, abgespeichert werden.

Der bei einem Anfahrvorgang erfasste, vom Beginn des Einkuppelvorgangs bis zum Kupplungsansprechzeitpunkt zurückzulegende Kupplungsweg kann vor dem Abspeichern mit einem bei einem vorhergehenden Anfahrvorgang erfassten und abgespeicherten Wert des vom Beginn des Einkuppelvorgangs bis zum Kupplungsansprechzeitpunkt zurückzulegenden Kupplungswegs gefiltert (z. B. gemittelt) werden. Der zur Filterung des bei einem aktuellen Anfahrvorgang erfassten Kupplungswegwerts verwendete Kupplungswegwert kann z.B. der bei dem unmittelbar vorausgehenden Anfahrvorgang ermittelte Kupplungsweg sein. Eine derartige Filterung erlaubt beispielsweise eine rasche und einfache Erkennung von Messfehlern und gewährleistet dadurch eine höhere Funktionssicherheit des erfindungsgemäßen Verfahrens bzw. Systems.

Vorzugsweise erfolgt die Erfassung des vom Beginn des Einkuppelvorgangs bis zum Kupplungsansprechzeitpunkt zurückzulegenden Kupplungswegs durch einen Kupplungswegsensor, wodurch eine einfache und zuverlässige Erfassung des Kupplungswegs sichergestellt werden kann.

Gemäß einer Ausgestaltung der Erfindung wird bei jedem Anfahrvorgang oder intervallweise eine Einkuppelgeschwindigkeit erfasst. Die erste Zeitspanne vom Beginn des Einkuppelvorgangs bis zum Kupplungsansprechzeitpunkt kann dann aus der erfassten Einkuppelgeschwindigkeit und einem abgespeicherten Wert des vom Beginn des Einkuppelvorgangs bis zum Kupplungsansprechzeitpunkt zurückzulegenden Kupplungswegs ermittelt (z. B. geschätzt oder berechnet) werden. Wie bereits ausgeführt, hängt die Dauer der ersten Zeitspanne vom Beginn des Einkuppelvorgangs bis zum Kupplungsansprechzeitpunkt von der Einkuppelgeschwindigkeit, d. h. der Geschwindigkeit, mit der ein Fahrer des Fahrzeugs das Kupplungspedal löst, und dem vom Beginn des Einkuppelvorgangs bis zum Kupplungsansprechzeitpunkt zurückzulegenden Kupplungsweg ab. Die Ermittlung der ersten Zeitspanne unmittelbar aus diesen beiden Werten ermöglicht daher ein sehr genaue und zuverlässige Bestimmung dieser Zeitspanne. Eine besonders genaue und nahezu temperatur- und verschleißunabhängige Bestimmung der ersten Zeitspanne ist möglich, wenn für die Berechnung auf einen möglichst aktuellen Wert des Kupplungswegs, beispielsweise den bei dem unmittelbar vorhergehenden Anfahrvorgang erfassten Kuppelungswegwert zurückgegriffen wird.

Für die Bestimmung der ersten Zeitspanne anhand der Einkuppelgeschwindigkeit und des vom Beginn des Einkuppelvorgangs bis zum Kupplungsansprechzeitpunkt zurückzulegenden Kupplungswegs bieten sich mehrere Möglichkeiten an. Beispielsweise kann die erste Zeitspanne bei jedem Einkuppelvorgang aktuell berechnet werden. Es ist auch möglich, bei vorhergehenden Anfahrvorgängen berechnete Werte der ersten Zeitspanne zusammen mit den der Berechnung zugrunde liegenden Einkuppelgeschwindigkeiten und Kupplungswegen in einer Lookup-Tabelle abzulegen und in Reaktion auf die Erfassung der Einkuppelgeschwindigkeit auf einen passenden Wert der ersten Zeitspanne aus der Lookup-Tabelle zuzugreifen. Um eine möglichst genaue Bestimmung der ersten Zeitspanne anhand der Lookup-Tabelle zu gewährleisten, sollten die in der Lookup-Tabelle abgelegten Werte regelmäßig aktualisiert werden.

Vorzugsweise wird die Einkuppelgeschwindigkeit während des Einkuppelvorgangs erfasst und ein anhand einer zu Beginn des Einkuppelvorgangs erfassten Einkuppelgeschwindigkeit ermittelter Wert der ersten Zeitspanne aktualisiert, wenn sich die Einkuppelkuppelgeschwindigkeit während des Einkuppelvorgangs ändert. Die Messung der Einkuppelgeschwindigkeit erfolgt z. B. kontinuierlich oder in kurzen Zeitabständen, also in einer derartigen Art und Weise, dass Veränderungen der Einkuppelgeschwindigkeit während des Einkuppelvorgangs erfasst werden können. Solche Veränderungen der Einkuppelgeschwindigkeit treten beispielsweise auf, wenn ein Fahrzeugführer das Kupplungspedal zunächst rasch und im späteren Verlauf des Einkuppelvorgangs langsamer löst oder umgekehrt.

Eine Aktualisierung des Werts der ersten Zeitspanne kann z. B. dann vorgesehen werden, wenn die Differenz zwischen der zu Beginn des Einkuppelvorgangs erfassten Einkuppelgeschwindigkeit und einer aktuell während des Einkuppelvorgangs gemessenen Einkuppelgeschwindigkeit einen vorbestimmten Schwellenwert überschreitet. Die Berechnung eines aktualisierten Werts der ersten Zeitspanne kann auf verschiedene Art und Weise erfolgen. Beispielsweise ist es möglich, einen ersten Teil der ersten Zeitspanne anhand der zu Beginn des Einkuppelvorgangs erfassten Einkuppelgeschwindigkeit und des bis zum Erreichen des Schwellenwerts zurückgelegten Kupplungswegs und einen zweiten Teil der ersten Zeitspanne anhand der beim Erreichen des Schwellenwerts gemessenen Einkuppelgeschwindigkeit und des restlichen, bis zum Kupplungsansprechzeitpunkt zurückzulegenden Kupplungswegs zu berechnen. Der aktualisierte Wert der gesamten ersten Zeitspanne entspricht dann der Summe der derart berechneten ersten und zweiten Teile der ersten Zeitspanne. Es ist jedoch auch möglich, den jeweiligen Änderungen der Einkuppelgeschwindigkeit, d. h. den jeweiligen Differenzen zwischen der zu Beginn des Einkuppelvorgangs erfassten Einkuppelgeschwindigkeit und einer aktuell während des Einkuppelvorgangs gemessenen Einkuppelgeschwindigkeit zugeordnete Korrekturfaktoren für die erste Zeitspanne beispielsweise in einer Lookup-Tabelle vorzugeben und den aktualisierten Wert der ersten Zeitspanne mit Hilfe dieser Korrekturfaktoren zu ermitteln.

Bei einer bevorzugten Ausführungsform der Erfindung wird der erfasste, vom Beginn des Einkuppelvorgangs bis zum Kupplungsansprechzeitpunkt zurückzulegende Kupplungsweg mit einem Referenzkupplungsweg verglichen und dadurch der Verschleißzustand der Kupplung ermittelt. Als Referenzkupplungsweg kann z. B. der vom Beginn des Einkuppelvorgangs bis zum Kupplungsansprechzeitpunkt zurückzulegende Kupplungsweg einer neuen, unverschlissenen Kupplung verwendet werden. Der Verschleiß der Kupplung ergibt sich dann aus einer Differenz zwischen dem gemessenen Kupplungsweg und dem vorgegebenen Referenzwert. Insbesondere dann, wenn der vom Beginn des Einkuppelvorgangs bis zum Kupplungsansprechzeitpunkt zurückzulegende Kupplungsweg bei jedem Anfahrvorgang erfasst wird, liefert der Vergleich dieses gemessenen Werts mit dem vorgegebenen Referenzwert sehr genaue Informationen über den aktuellen Verschleißzustand der Kupplung.

Vorzugsweise wird ein Warnsignal an einen Fahrer des Kraftfahrzeugs ausgegeben, wenn ein für den Verschleißzustand der Kupplung charakteristischer Differenzwert zwischen dem erfassten Kupplungsweg und dem Referenzkupplungsweg einen vorbestimmten Schwellenwert überschreitet. Das Warnsignal kann ein optisch oder akustisch wahrnehmbares Signal sein, das dem Fahrer beispielsweise bei jedem Start des Kraftfahrzeugs ausgegeben wird.

Weitere Vorteile und Ausgestaltungen der Erfindung ergeben sich aus der nachfolgenden Beschreibung des bevorzugten Ausführungsbeispiels und den Figuren. Es zeigen:

Fig. 1   ein Flussdiagramm eines Ausführungsbeispiels des erfindungsgemäßen Ver- fahrens zur Steuerung eines mit einer EPB ausgestatteten Bremssys- tems;

Fig. 2   ein Diagramm, in dem der Verlauf des Kupplungswegs, der Beschleunigung sowie der Änderung der Beschleunigung eines Fahrzeugs in Abhängig- keit der Zeit während des Einkuppelvorgangs dargestellt sind; und

Fig. 3   ein Flussdiagramm, das die Ermittlung einer ersten Zeitspanne vom Beginn eines Einkuppelvorgangs bis zum Erreichen eines Kupplungsansprech- zeitpunkts im Rahmen des erfindungsgemäßen Steuerungsverfahrens veranschaulicht.

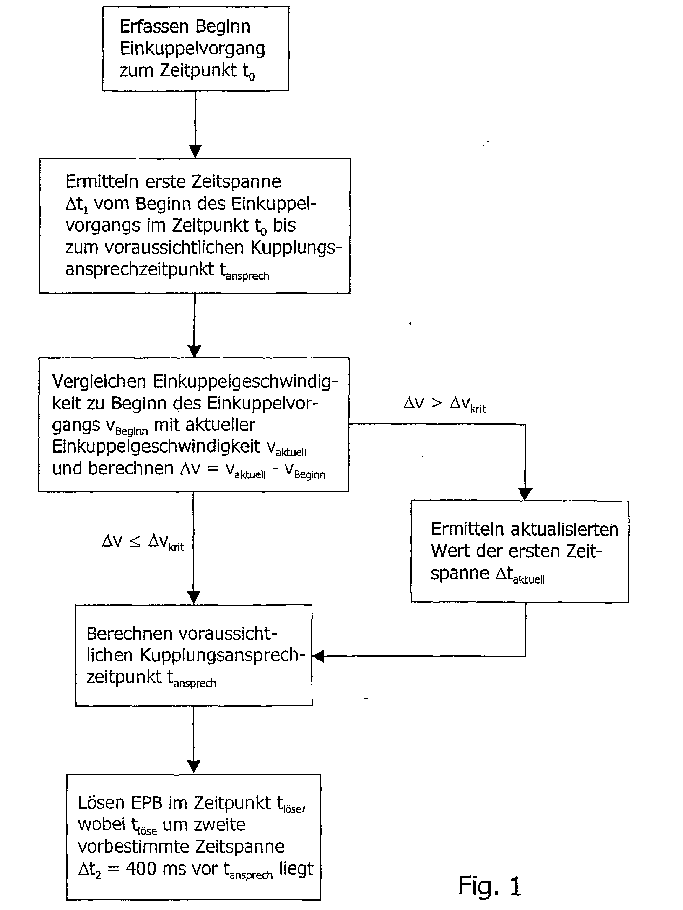

Das in Fig. 1 dargestellte Flussdiagramm zeigt schematisch die Schritte eines Verfahrens zur Steuerung eines mit einer elektrischen Parkbremse ausgestatteten Bremssystems. In einem ersten Verfahrensschritt wird der Beginn eines Einkuppelvorgangs zu einem Zeitpunkt $t_0$ mittels einer geeigneten Messvorrichtung, wie z. B. eines Kupplungswegsensors oder dergleichen erfasst. In einem zweiten Verfahrensschritt erfolgt durch Schätzen die Bestimmung einer ersten Zeitspanne $\Delta t_1$ vom Beginn des Einkuppelvorgangs im Zeitpunkt $t_0$ bis zu einem voraussichtlichen Ansprechzeitpunkt der Kupplung $t_{ansprech}$. Der Kupplungsansprechzeitpunkt $t_{ansprech}$ stellt den Moment dar, ab dem eine Kraftübertragung von der Kupplung auf die angetriebene Achse des Kraftfahrzeugs stattfindet und somit ein Anfahren des Fahrzeugs ermöglicht wird.

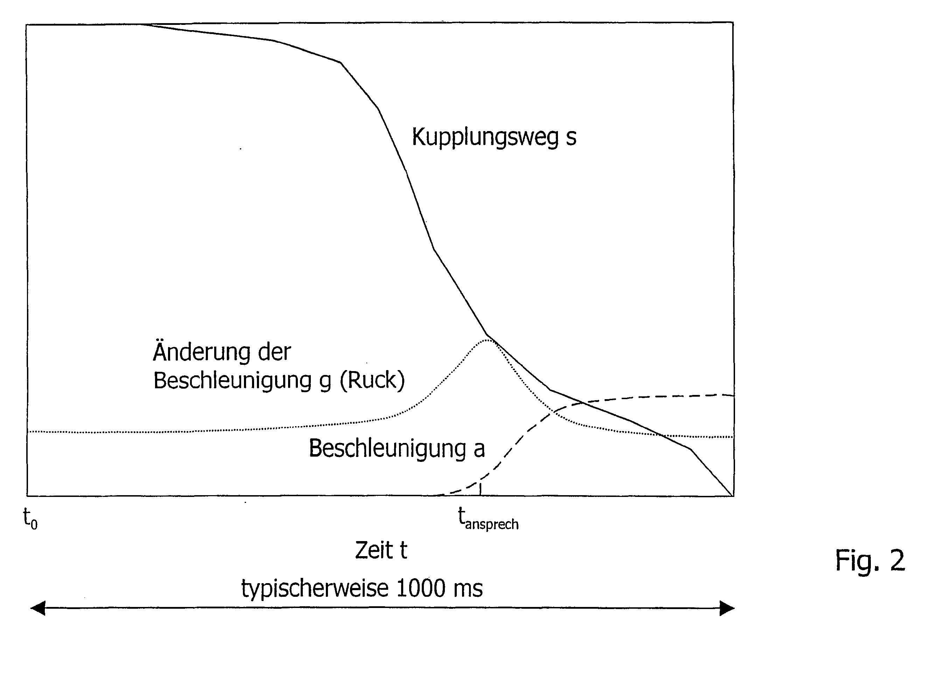

Das in der Fig. 2 dargestellte Diagramm zeigt den Verlauf des Kupplungswegs s (durchgezogene Linie), der Beschleunigung a (gestrichelte Linie) sowie Änderung der Beschleunigung g (gepunktete Linie) eines mit einem Schaltgetriebe ausgestatteten Fahrzeugs in Abhängigkeit der Zeit t während eines typischerweise 1000 ms andauernden Einkuppelvorgangs. Wenn ein Fahrer des Fahrzeugs im Zeitpunkt $t_0$ beginnt, das getretene Kupplungspedal zu lösen und somit den Einkuppelvorgang zu initiieren, muss zunächst ein von der Temperatur und insbesondere vom Verschleiß der Kupplung abhängiger Leerweg der Kupplung überwunden werden, bevor die Kupplung im Zeitpunkt $t_{ansprech}$ "greift" und ein mit einer Zunahme der Beschleunigung a verbundenes Anfahren des Fahrzeugs ermöglicht.

Im Ansprechzeitpunkt der Kupplung $t_{ansprech}$ findet eine für diesen Zeitpunkt charakteristische und in der Fig. 2 in Form eines Peaks erkennbare Änderungen der Beschleunigung des Fahrzeugs statt. Aufgrund dessen kann der Kupplungsansprechzeitpunkt $t_{ansprech}$ auf einfache Art durch die Erfassung der für diesen Zeitpunkt charakteristischen Änderung der Beschleunigung g mittels eines geeigneten Sensors erkannt werden. In Abhängigkeit von der technischen Ausstattung des Fahrzeugs kann die (Längs-) Beschleunigung entweder direkt mittels eines Längsbeschleunigungssensors messtechnisch erfasst werden oder indirekt, beispielsweise durch Auswerten von Daten eines Gierraten- und/oder Querbeschleunigungssensors oder durch Auswerten der Daten eines Raddrehzahl- bzw. Geschwindigkeitssensors.

Da auch die Motordrehzahl sowie das Motordrehmoment im Kupplungsansprechzeitpunkt $t_{ansprech}$ eine für diesen Zeitpunkt charakteristische Änderung erfahren, ist es ebenso möglich, den Kupplungsansprechzeitpunkt $t_{ansprech}$ auf der Grundlage einer Erfassung dieser Motordaten mittels geeigneter Sensoren zu bestimmen.

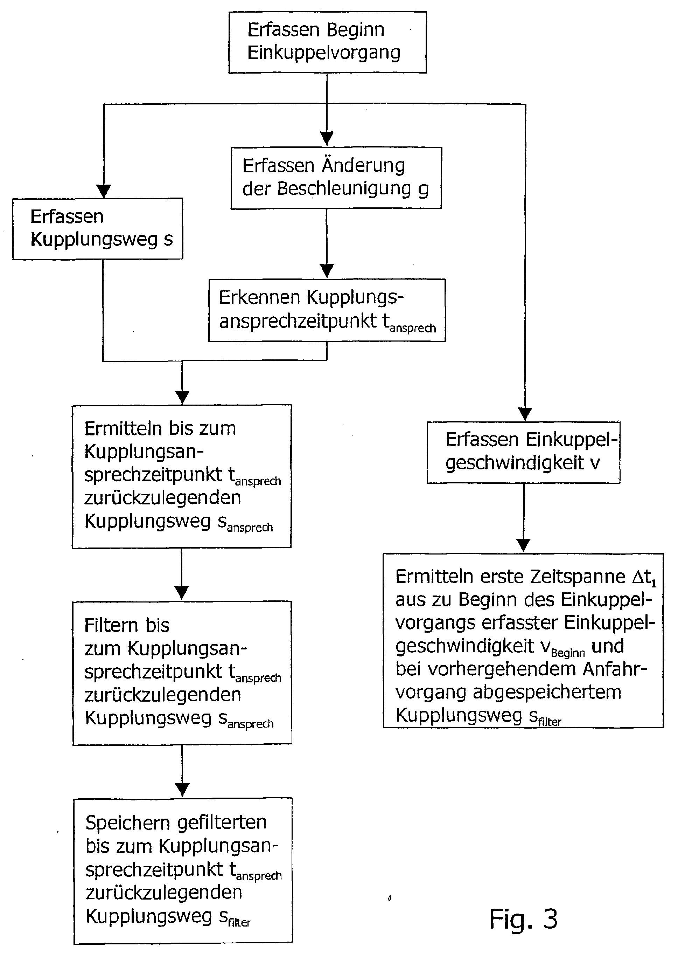

Anhand des in der Fig. 3 dargestellten Flussdiagramms wird nun die Bestimmung der ersten Zeitspanne $\Delta t_1$ vom Beginn des Einkuppelvorgangs im Zeitpunkt $t_0$ bis zum voraussichtlichen Kupplungsansprechzeitpunkt $t_{ansprech}$ erläutert.

Während eines Anfahrvorgangs des Fahrzeugs werden in Reaktion auf den Beginn eines Einkuppelvorgangs der Kupplungsweg s sowie die Änderung der Beschleunigung g des Fahrzeugs mittels eines Kupplungswegsensors bzw. eines Längsbeschleunigungssensors kontinuierlich erfasst. Wie oben im Zusammenhang mit der Fig. 2 erläutert wurde, besitzt die Änderung der Beschleunigung g des Fahrzeugs beim Ansprechen der Kupplung einen charakteristischen Peak, so dass das Erreichen des Kupplungsansprechzeitpunkts $t_{ansprech}$ anhand dieses charakteristischen Peaks erkannt und der vom Beginn des Einkuppelvorgangs bis zum Kupplungsansprechzeitpunkt $t_{ansprech}$ zurückzulegende Kupplungsweg $s_{ansprech}$ ermittelt werden kann. Der Peak ist für den Fahrer als Ruck wahrnehmbar.

In einem nachfolgenden Schritt wird der ermittelte, vom Beginn des Einkuppelvorgangs bis zum Kupplungsansprechzeitpunkt $t_{ansprech}$ zurückzulegende Kupplungsweg $s_{ansprech}$ mit einem bei einem vorhergehenden Anfahrvorgang erfassten und abgespeicherten Wert des Kupplungswegs $s_{ansprech}$ gefiltert, um eventuelle Messfehler schneller erkennen und die Funktionssicherheit des Verfahrens erhöhen zu können.

Schließlich wird der gefilterte Wert des vom Beginn des Einkuppelvorgangs bis zum Kupplungsansprechzeitpunkt $t_{ansprech}$ zurückzulegende Kupplungsweg $s_{filter}$ in einer geeigneten, mit einer elektronischen Steuereinheit verbundenen Speichereinrichtung abgespeichert. Diese Schritte werden bei jedem Anfahrvorgang des Fahrzeugs erneut durchlaufen. Dadurch wird sichergestellt, dass der abgespeicherte, gefilterte Wert des vom Beginn des Einkuppelvorgangs bis zum Kupplungsansprechzeitpunkt $t_{ansprech}$ zurückzulegenden Kupplungswegs $s_{filter}$ stets den aktuellen, von der Temperatur und insbesondere vom Verschleißzustand der Kupplung abhängigen bis zum Kupplungsansprechzeitpunkt $t_{ansprech}$ zurückzulegenden Kupplungsweg wiedergibt.

Neben der Erfassung des Kupplungswegs s und der Erfassung der Änderung der Beschleunigung g des Fahrzeugs wird in Reaktion auf den Beginn des Einkuppelvorgangs auch eine während des gesamten Einkuppelvorgangs andauernde, kontinuierliche Erfassung einer Einkuppelgeschwindigkeit v, d. h. der Geschwindigkeit, mit der der Fahrer des Fahrzeugs das Kupplungspedal löst, initiiert. Die Dauer der ersten Zeitspanne $\Delta t_1$ vom Beginn des Einkuppelvorgangs im Zeitpunkt $t_0$ bis zu einem voraussichtlichen Ansprechzeitpunkt der Kupplung $t_{ansprech}$ wird von der Einkuppelgeschwindigkeit v und dem bis zum Ansprechen der Kupplung zurückzulegenden Kupplungsweg bestimmt. Daher kann in einem nachfolgenden Schritt die erste Zeitspanne $\Delta t_1$ gemäß der Gleichung

$$\Delta t_1 = s_{filter}/v_{Beginn}$$

berechnet werden, wobei $v_{Beginn}$ eine zu Beginn des Einkuppelvorgangs erfasste Einkuppelgeschwindigkeit und $s_{filter}$ ein beim unmittelbar vorhergehenden Anfahrvorgang erfasster, gefilterter und abgespeicherter Wert des vom Beginn des Einkuppelvorgangs bis zum Kupplungsansprechzeitpunkt $t_{ansprech}$ zurückzulegenden Kupplungswegs ist.

Da die Einkuppelgeschwindigkeit v während des gesamten Einkuppelvorgangs gemessen wird, kann, wie in Fig. 1 gezeigt ist, kontinuierlich überprüft werden, ob sich die Einkuppelgeschwindigkeit v während der Dauer des Einkuppelvorgangs ändert oder im wesentlichen konstant bleibt. Eine Veränderung der Einkuppelgeschwindigkeit v tritt immer dann auf, wenn ein Fahrzeugführer das Kupplungspedal zunächst rasch und im späteren Verlauf des Einkuppelvorgangs langsamer löst oder umgekehrt. Wenn eine Differenz $\Delta v$ zwischen der zu Beginn des Einkuppelvorgangs erfassten und der Berechnung der ersten Zeitspanne $\Delta t_1$ zugrundegelegten Einkuppelgeschwindigkeit $v_{Beginn}$ und einer während des Einkuppelvorgangs gemessenen Einkuppelgeschwindigkeit $v_{aktuell}$ einen vorbestimmten Schwellenwert $\Delta v_{krit}$ überschreitet, wird ein aktualisierter Wert der ersten Zeitspanne $\Delta t_{1aktuell}$ ermittelt. Der aktualisierte Wert der ersten Zeitspanne $\Delta t_{1aktuell}$ wird anhand der Gleichung

$$\Delta t_{1aktuell} = s_{aktuell}/v_{Beginn} + (s_{filter} - s_{aktuell})/v_{aktuell}$$

berechnet, wobei $s_{aktuell}$ den bis zur Überschreitung des vorbestimmten Schwellenwerts $\Delta v_{krit}$ zurückgelegten und mittels des Kupplungswegsensors erfassten Kupplungsweg darstellt.

Wie aus der Fig. 1 weiter ersichtlich ist, wird dann in einem nachfolgendem Schritt anhand der Gleichungen

$$t_{ansprech} = t_0 + \Delta t_1$$

bzw.

$$t_{ansprech} = t_0 + \Delta t_{1aktuell}$$

der voraussichtliche Kupplungsansprechzeitpunkt $t_{ansprech}$ bestimmt.

Um ein ungehindertes, komfortables und ruckfreies Anfahren des Fahrzeugs zu ermöglichen, folgt schließlich im letzten Schritt des Steuerungsverfahrens die Deaktivierung der elektrischen Parkbremse in einem Lösezeitpunkt $t_{löse}$, der um eine zweite vorbestimmten Zeitspanne $\Delta t_2$ vor dem ermittelten voraussichtlichen Kupplungsansprechzeitpunkt $t_{ansprech}$ liegt. Die zweite vorbestimmten Zeitspanne $\Delta t_2$ beträgt typischerweise ca. 400 ms, was der üblichen Reaktionszeit einer elektrischen Parkbremse vom Beginn ihrer Deaktivierung bis zum vollständigen Abbau der von ihr aufgebrachten Bremskräfte entspricht. Dadurch wird sichergestellt, dass die von der EPB aufgebrachten Bremskräfte beim Ansprechen der Kupplung vollständig abgebaut sind.

Bei dem hier dargestellten Ausführungsbeispiel eines Steuerungsverfahren für ein mit einer elektrischen Parkbremse ausgestattetes Bremssystem wird der bei jedem Anfahrvorgang des Kraftfahrzeugs erfasste, gefilterte und in einer geeigneten Speichereinrichtung abgespeicherte bis zum Ansprechen der Kupplung zurückzulegende Kupplungsweg $s_{filter}$ nicht nur zur Berechnung der ersten Zeitspanne $\Delta t_1$ vom Beginn des Einkuppelvorgangs bis zum Kupplungsansprechzeitpunkt $t_{ansprech}$ genutzt, sondern auch zur Überwachung des Kupplungsverschleißes herangezogen. Zu diesem Zweck wird der abgespeicherte bis zum Ansprechen der Kupplung zurückzulegende Kupplungsweg $s_{filter}$ bei jedem Anfahrvorgang mit einem Referenzkupplungsweg $s_{Ref}$ verglichen und ein Differenzwert $\Delta s = s_{filter} - s_{Ref}$ gebildet. Der Referenzkupplungsweg $s_{Ref}$ stellt dabei den vom Beginn des Einkuppelvorgangs bis zum Kupplungsansprechzeitpunkt zurückzulegenden Kupplungsweg einer neuen, unverschlissenen Kupplung dar, so dass der Differenzwert $\Delta s$ dem aktuellen Verschleiß der Kupplung entspricht. Wenn der für den Verschleißzustand der Kupplung charakteristische Differenzwert $\Delta s$ einen vorbestimmten Schwellenwert $\Delta s_{krit}$ überschreitet, wird bei jedem Start des Kraftfahrzeugs ein optisch oder akustisch wahrnehmbares Signal an den Fahrer des Kraftfahrzeugs ausgegeben.

Ein weiteres, in der Figuren nicht dargestelltes Ausführungsbeispiel eines Verfahrens zur Steuerung eines mit einer elektrischen Parkbremse ausgestatteten Bremssystems unterscheidet sich von dem oben beschriebenen und in den Figuren 1 bis 3 dargestellten Ausführungsbeispiel dadurch, dass die erste Zeitspanne $\Delta t_1$ nicht bei jedem Einkuppelvorgang aktuell berechnet wird. Stattdessen wird der Wert der ersten Zeitspanne $\Delta t_1$ einer Lookup-Tabelle entnommen, in der bei vorhergehenden Anfahrvorgängen berechnete Werte der ersten Zeitspanne $\Delta t_1$ zusammen mit den der Berechnung zugrunde liegenden Einkuppelgeschwindigkeiten v und Kupplungswegen $s_{filter}$ abgelegt sind. Die Auswahl eines geeigneten Werts der ersten Zeitspanne $\Delta t_1$ aus der Lookup-Tabelle erfolgt anhand der während des Einkuppelvorgangs gemessenen Einkuppelgeschwindigkeit v, wobei auf einen möglichst aktuellen, in der Lookup-Tabelle gespeicherten Wert der ersten Zeitspanne $\Delta t_1$ zurückgegriffen werden sollte, um der aus Temperaturschwankungen und insbesondere einem Verschleiß der Kupplung resultierenden Variationen des bis zum Ansprechen der Kupplung zurückzulegenden Kupplungswegs Rechnung zutragen.

**Patentansprüche**

1. Verfahren zur Steuerung eines mit einer elektrischen Parkbremse (EPB) ausgestatten Bremssystems für ein Kraftfahrzeug, bei dem die elektrische Parkbremse in Reaktion auf die Erkennung eines Anfahrvorgangs gelöst wird, wobei ein Lösezeitpunkt ($t_{löse}$) der elektrischen Parkbremse in Abhängigkeit mindestens eines gemessenen Parameters ($t_0$, s, v) eines Einkuppelvorgangs festgelegt wird, **dadurch gekennzeichnet, dass** eine erste Zeitspanne ($\Delta t_1$) vom Beginn des Einkuppelvorgangs bis zu einem Kupplungsansprechzeitpunkt ($t_{ansprech}$) ermittelt wird und der Lösezeitpunkt ($t_{löse}$) der elektrischen Parkbremse um eine zweite Zeitspanne ($\Delta t_2$) vor dem Kupplungsansprechzeitpunkt ($t_{ansprech}$) gewählt wird.

**2.** Verfahren nach Anspruch 1, **dadurch gekennzeichnet, dass** der Kupplungsansprechzeitpunkt ($t_{ansprech}$) durch die Erfassung einer Änderung der Motordrehzahl oder des Motordrehmoments oder durch die Erfassung einer Änderung der Beschleunigung (g) des Fahrzeugs erkannt wird.

**3.** Verfahren nach Anspruch 1 oder 2, **dadurch gekennzeichnet, dass** ein vom Beginn des Einkuppelvorgangs bis zum Kupplungsansprechzeitpunkt ($t_{ansprech}$) zurückzulegender Kupplungsweg ($s_{ansprech}$) erfasst und abgespeichert wird.

**4.** Verfahren nach Anspruch 3, **dadurch gekennzeichnet, dass** der bei einem Anfahrvorgang erfasste vom Beginn des Einkuppelvorgangs bis zum Kupplungsansprechzeitpunkt ($t_{ansprech}$) zurückzulegende Kupplungsweg ($s_{ansprech}$) vor dem Abspeichern mit einem bei einem vorhergehenden Anfahrvorgang erfassten und abgespeicherten Wert des Kupplungswegs ($s_{ansprech}$) gefiltert wird.

**5.** Verfahren nach einem der Ansprüche 1 bis 4, **dadurch gekennzeichnet, dass** bei jedem Anfahrvorgang eine Einkuppelgeschwindigkeit (v) erfasst wird.

**6.** Verfahren nach Anspruch 5, **dadurch gekennzeichnet, dass** die erste Zeitspanne ($\Delta t_1$) vom Beginn des Einkuppelvorgangs bis zum Kupplungsansprechzeitpunkt ($t_{ansprech}$) aus der erfassten Einkuppelgeschwindigkeit (v) und einem abgespeicherten Wert des vom Beginn des Einkuppelvorgangs bis zum Kupplungsansprechzeitpunkt ($t_{ansprech}$) zurückzulegenden Kupplungswegs ($s_{ansprech}$) ermittelt wird.

**7.** Verfahren nach Anspruch 5 oder 6, **dadurch gekennzeichnet, dass** die Einkuppelgeschwindigkeit (v) während des Einkuppelvorgangs erfasst und ein anhand einer zu Beginn des Einkuppelvorgangs erfassten Einkuppelgeschwindigkeit ($v_{Beginn}$) ermittelter Wert der ersten Zeitspanne ($\Delta t_1$) aktualisiert wird, wenn sich die Einkuppelkuppelgeschwindigkeit (v) während des Einkuppelvorgangs ändert.

**8.** Verfahren nach einem der Ansprüche 3 bis 7, **dadurch gekennzeichnet, dass** der erfasste, vom Beginn des Einkuppelvorgangs bis zum Kupplungsansprechzeitpunkt ($t_{ansprech}$) zurückzulegende Kupplungsweg ($s_{ansprech}$) mit einem Referenzkupplungsweg ($s_{Ref}$) verglichen und **dadurch** der Verschleißzustand der Kupplung ermittelt wird.

**9.** System zur Steuerung eines mit einer elektrischen Parkbremse (EPB) ausgestatteten Bremssystems, das dazu eingerichtet ist, die elektrische Parkbremse in Reaktion auf die Erkennung eines Anfahrvorgangs zu lösen, wobei das System eine Einrichtung zur Erfassung mindestens eines Parameters ($t_0$, s, v) eines Einkuppelvorgangs umfasst und dazu eingerichtet ist, einen Lösezeitpunkt ($t_{löse}$) der elektrischen Parkbremse in Abhängigkeit des mindestens einen gemessenen Parameters ($t_0$, s, v) des Einkuppelvorgangs festzulegen, **dadurch gekennzeichnet, dass** das System dazu eingerichtet ist, eine erste Zeitspanne ($\Delta t_1$) vom Beginn des Einkuppelvorgangs bis zu einem Kupplungsansprechzeitpunkt ($t_{ansprech}$) zu ermitteln und den Lösezeitpunkt ($t_{löse}$) der elektrischen Parkbremse so festzulegen, dass er um eine zweite vorbestimmte Zeitspanne ($\Delta t_2$) vor dem Kupplungsansprechzeitpunkt ($t_{ansprech}$) liegt.

**10.** System nach Anspruch 9, **dadurch gekennzeichnet, dass** das System einen Motordrehzahlsensor, einen Motordrehmomentsensor oder einen Sensor der eine für die Beschleunigung charakteristishe Größe misst, umfasst und der Kupplungsansprechzeitpunkt ($t_{ansprech}$) durch die Erfassung einer Änderung der Motordrehzahl oder des Motordrehmoments oder durch die Erfassung einer Änderung der Beschleunigung (g) des Fahrzeugs erkannt wird.

**11.** System nach Anspruch 9 oder 10, **dadurch gekennzeichnet, dass** das System einen Kupplungswegsensor zur Erfassung eines vom Beginn des Einkuppelvorgangs bis zum Kupplungsansprechzeitpunkt ($t_{ansprech}$) zurückzulegenden Kupplungswegs ($s_{ansprech}$) sowie eine Speichereinrichtung zum Abspeichern des erfassten vom Beginn des Einkuppelvorgangs bis zum Kupplungsansprechzeitpunkt ($t_{ansprech}$) zurückzulegenden Kupplungswegs ($s_{ansprech}$) umfasst.

**12.** System nach Anspruch 11, **dadurch gekennzeichnet, dass** das System eine Einrichtung zur Erfassung einer Einkuppelgeschwindigkeit (v) umfasst und dazu eingerichtet ist, die erste Zeitspanne ($\Delta t_1$) vom Beginn des Einkuppelvorgangs bis zum Kupplungsansprechzeitpunkt ($t_{ansprech}$) aus der erfassten Einkuppelgeschwindigkeit (v) und einem abgespeicherten Wert des vom Beginn des Einkuppelvorgangs bis zum Kupplungsansprechzeitpunkt ($t_{ansprech}$) zurückzulegenden Kupplungswegs ($s_{ansprech}$) zu ermitteln.

**13.** System nach Anspruch 11 oder 12, **dadurch gekennzeichnet, dass** das System eine Einrichtung zur Kuppiungsverschieißermittlung umfasst, die den erfassten vom Beginn des Einkuppelvorgangs bis zum Kupplungsansprechzeitpunkt ($t_{ansprech}$) zurückzulegenden Kupplungsweg ($s_{ansprech}$) mit einem Referenzkupplungsweg ($s_{Ref}$) vergleicht.

**Claims**

1. A method for controlling a braking system, equipped with an electric parking brake (EPB), for a motor vehicle, in which the electric parking brake is released in response to the identification of a moving-off operation, wherein a release instant ($t_{löse}$) of the electric parking brake is defined in dependence on at least one measured parameter ($t_0$, s, v) of a clutch engagement operation, **characterized in that** a first time interval ($\Delta t_1$) from the start of the clutch engagement operation until a clutch operating instant ($t_{ansprech}$) is determined and the release instant ($t_{löse}$) of the electric parking brake is selected such that it precedes the clutch operating instant ($t_{ansprech}$) by a second time interval ($\Delta t_2$).

2. The method according to claim 1, **characterized in that** the clutch operating instant ($t_{ansprech}$) is identified through the detection of a change in the engine speed or the engine torque or through the detection of a change in the acceleration (g) of the vehicle.

3. The method according to claim 1 or 2, **characterized in that** a clutch travel ($s_{ansprech}$) to be covered from the start of the clutch engagement operation until the clutch operating instant ($t_{ansprech}$) is detected and stored.

4. The method according to claim 3, **characterized in that** the clutch travel ($s_{ansprech}$) that is to be covered from the start of the clutch engagement operation until the clutch operating instant ($t_{ansprech}$), and that is detected during a moving-off operation, is filtered, prior to storage, with a value of the clutch travel ($s_{ansprech}$) detected and stored during a previous moving-off operation.

5. The method according to any one of claims 1 to 4, **characterized in that** a clutch engagement speed (v) is detected during each moving-off operation.

6. The method according to claim 5, **characterized in that** the first time interval ($\Delta t_1$) from the start of the clutch engagement operation until the clutch operating instant ($t_{ansprech}$) is determined from the detected clutch engagement speed (v) and a stored value of the clutch travel ($s_{ansprech}$) to be covered from the start of the clutch engagement operation until the clutch operating instant ($t_{ansprech}$).

7. The method according to claim 5 or 6, **characterized in that** the clutch engagement speed (v) is detected during the clutch engagement operation and a value of the first time interval ($\Delta t_1$) that is determined on the basis of a clutch engagement speed ($v_{beginn}$) detected at the start of the clutch engagement operation is updated if the clutch engagement speed (v) changes during the clutch engagement operation.

8. The method according to any one of claims 3 to 7, **characterized in that** the detected clutch travel ($s_{ansprech}$) that is to be covered from the start of the clutch engagement operation until the clutch operation instant ($t_{ansprech}$) is compared with a reference clutch travel ($s_{Ref}$) and the state of wear of the clutch is thereby determined.

9. A system for controlling a braking system equipped with an electric parking brake (EPB), which system is set up to release the electric parking brake in response to the identification of a moving-off operation, the system comprising a device for detecting at least one parameter ($t_0$, s, v) of a clutch engagement operation and being set up to define a release instant ($t_{löse}$) of the electric parking brake in dependence on the at least one measured parameter ($t_0$, s, v) of the clutch engagement operation, **characterized in that** the system is set up to determine a first time interval ($\Delta t_1$) from the start of the clutch engagement operation until a clutch operating instant ($t_{ansprech}$) and to define the release instant ($t_{löse}$) of the electric parking brake such that it precedes the clutch operating instant ($t_{ansprech}$) by a second, predetermined, time interval ($\Delta t_2$).

10. The system according to claim 9, **characterized in that** the system comprises an engine-speed sensor, an engine-torque sensor or a sensor which measures a quantity that is characteristic of the acceleration, and the clutch operating instant ($t_{ansprech}$) is identified through the detection of a change in the engine speed or in the engine torque, or through the detection of a change in the acceleration (g) of the vehicle.

11. The system according to claim 9 or 10, **characterized in that** the system comprises a clutch-travel sensor for detecting a clutch travel ($s_{ansprech}$) to be covered from the start of the clutch in the operation until the clutch operating instant ($t_{ansprech}$) and a storage device for storing the detected clutch travel ($s_{ansprech}$) to be covered on the start of the clutch engagement operation until the clutch operating instant ($t_{ansprech}$).

12. The system according to claim 11, **characterized in that** the system comprises a device for detecting a clutch engagement speed (v) and is set up to determine the first time interval ($\Delta t_1$) from the start of the clutch engagement operation until the clutch operating instant ($t_{ansprech}$) from the detected clutch engagement speed (v) and a stored value of the clutch travel ($s_{ansprech}$) to be covered from the start of the clutch engagement operation until the clutch operating instant ($t_{ansprech}$).

13. The system according to claim 11 or 12, **characterized in that** the system comprises a device for determining clutch wear, which device compares the detected clutch travel ($s_{ansprech}$) to be covered from the start of the clutch engagement operation until the clutch operating instant ($t_{ansprech}$) with a reference clutch travel ($s_{Ref}$).

**Revendications**

1. Procédé pour commander un système de freinage équipé d'un frein de stationnement électrique (EPB) destiné à un véhicule automobile, dans le cadre duquel le frein de stationnement électrique est relâché suite à la reconnaissance d'un processus de démarrage, un instant de relâchement ($t_{löse}$) du frein de stationnement électrique étant établi en fonction d'au moins un paramètre mesuré ($t_0$, s, v) d'un processus d'embrayage, **caractérisé en ce qu'**un premier intervalle de temps ($\Delta t_1$) est déterminé depuis le début du processus d'embrayage jusqu'à un instant de réponse de couplage ($t_{ansprech}$), et l'instant de relâchement ($t_{löse}$) du frein de stationnement électrique choisi à un deuxième intervalle de temps ($\Delta t_2$) avant l'instant de réponse de couplage ($t_{ansprech}$).

2. Procédé selon la revendication 1, **caractérisé en ce que** l'instant de réponse de couplage ($t_{ansprech}$) est reconnu par détection d'une modification du régime moteur ou du couple moteur ou par détection d'une modification de l'accélération (g) du véhicule automobile.

3. Procédé selon la revendication 1 ou 2, **caractérisé en ce qu'**est détectée et enregistrée une course d'embrayage ($s_{ansprech}$) à parcourir depuis le début du processus d'embrayage jusqu'à l'instant de réponse de couplage ($t_{ansprech}$).

4. Procédé selon la revendication 3, **caractérisé en ce que** la course de couplage ($s_{ansprech}$) à parcourir depuis le début du processus d'embrayage jusqu'à l'instant de réponse de couplage ($t_{ansprech}$) détectée lors d'un processus de démarrage est, avant son enregistrement, filtrée à partir d'une valeur de course de couplage ($s_{ansprech}$) détectée et enregistrée lors d'un processus de démarrage préalable.

5. Procédé selon l'une des revendications 1 à 4, **caractérisé en ce qu'**est détectée une vitesse d'embrayage (v) lors de chaque processus de démarrage.

6. Procédé selon la revendication 5, **caractérisé en ce que** le premier intervalle de temps ($\Delta t_1$) est déterminé depuis le début du processus d'embrayage jusqu'à un instant de réponse de couplage ($t_{ansprech}$) à partir de la vitesse d'embrayage (v) détectée et d'une valeur de course de couplage ($s_{ansprech}$) enregistrée et à parcourir depuis le début du processus d'embrayage jusqu'à l'instant de réponse de couplage ($t_{ansprech}$).

7. Procédé selon la revendication 5 ou 6, **caractérisé en ce que** la vitesse d'embrayage (v) est détectée pendant le processus d'embrayage, et une valeur du premier intervalle de temps ($\Delta t_1$) qui est déterminée sur la base d'une vitesse d'embrayage ($V_{Beginn}$) détectée depuis le début du processus d'embrayage, est actualisée lorsqu'il y a modification de la vitesse d'embrayage (v) pendant le processus d'embrayage.

8. Procédé selon l'une des revendications 3 à 7, **caractérisé en ce que** la course de couplage ($s_{ansprech}$) détectée et à parcourir depuis le début du processus d'embrayage jusqu'à l'instant de réponse de couplage ($t_{ansprech}$) est comparée à une course de couplage de référence ($s_{Ref}$) et **en ce qu'**il est ainsi possible de déterminer l'état d'usure de l'embrayage.

9. Système pour commander un système de freinage équipé d'un frein de stationnement électrique (EPB) et conçu pour relâcher le frein de stationnement électrique suite à la reconnaissance d'un processus de démarrage, le système comprenant un dispositif pour détecter au moins un paramètre ($t_0$, s, v) d'un processus d'embrayage et étant conçu pour établir un instant de relâchement ($t_{löse}$) du frein de stationnement électrique en fonction d'au moins un paramètre

mesuré ($t_0$, s, v) du processus de couplage, **caractérisé en ce que** le système est conçu pour déterminer un premier intervalle de temps ($\Delta t_1$) depuis le début du processus d'embrayage jusqu'à un instant de réponse de couplage ($t_{ansprech}$) et d'établir l'instant de relâchement ($t_{löse}$) du frein de stationnement électrique de telle manière que celui-ci se situe avant l'instant de réponse de couplage ($t_{ansprech}$), à un deuxième intervalle de temps ($\Delta t_2$) prédéfini.

**10.** Système selon la revendication 9, **caractérisé en ce que** le système comprend un détecteur de régime moteur, un détecteur de couple moteur ou un détecteur mesurant une grandeur caractéristique de l'accélération, et **en ce que** l'instant de réponse de couplage ($t_{ansprech}$) est reconnu par détection d'une modification du régime moteur ou du couple moteur ou par détection d'une modification de l'accélération (g) du véhicule automobile.

**11.** Système selon la revendication 9 ou 10, **caractérisé en ce que** le système comprend un détecteur de course de couplage pour détecter une course de couplage ($s_{ansprech}$) à parcourir depuis le début du processus d'embrayage jusqu'à l'instant de réponse de couplage ($t_{ansprech}$), ainsi qu'un dispositif pour enregistrer la course de couplage ($s_{ansprech}$) détectée et à parcourir depuis le début du processus d'embrayage jusqu'à l'instant de réponse de couplage ($t_{ansprech}$).

**12.** Système selon la revendication 11, **caractérisé en ce que** le système comprend un dispositif pour détecter une vitesse d'embrayage (v) et est conçu pour déterminer un premier intervalle de temps ($\Delta t_1$) depuis le début du processus d'embrayage jusqu'à l'instant de réponse de couplage ($t_{ansprech}$) à partir de la vitesse d'embrayage (v) détectée et d'une valeur enregistrée de la course de couplage ($s_{ansprech}$) à parcourir depuis le début du processus d'embrayage jusqu'à l'instant de réponse de couplage ($t_{ansprech}$).

**13.** Système selon la revendication 11 ou 12, **caractérisé en ce que** le système comprend un dispositif pour déterminer l'usure de l'embrayage par comparaison de la course de couplage ($s_{ansprech}$) détectée et à parcourir depuis le début du processus d'embrayage jusqu'à l'instant de réponse de couplage ($t_{ansprech}$) avec une course de couplage de référence ($s_{Ref}$).

Fig. 1

Kupplungsweg s

Änderung der
Beschleunigung g (Ruck)

Beschleunigung a

$t_0$

$t_{ansprech}$

Zeit t

typischerweise 1000 ms

Fig. 2

EP 1 626 884 B1

```
┌─────────────────────────┐
│   Erfassen Beginn        │
│   Einkuppelvorgang       │
└─────────────────────────┘
```

```
┌─────────────────────────┐
│   Erfassen Änderung      │
│   der Beschleunigung g   │
└─────────────────────────┘
```

```
┌─────────────────────────┐
│   Erfassen               │
│   Kupplungsweg s         │
└─────────────────────────┘
```

```
┌─────────────────────────┐
│   Erkennen Kupplungs-    │
│   ansprechzeitpunkt      │
│   $t_{ansprech}$         │
└─────────────────────────┘
```

```
┌──────────────────────────────┐
│   Ermitteln bis zum           │
│   Kupplungsan-                │
│   sprechzeitpunkt            │
│   $t_{ansprech}$             │
│   zurückzulegenden           │
│   Kupplungsweg               │
│   $s_{ansprech}$             │
└──────────────────────────────┘
```

```
┌──────────────────────────────┐
│   Erfassen Einkuppel-         │
│   geschwindigkeit v           │
└──────────────────────────────┘
```

```
┌──────────────────────────────┐
│   Filtern bis                 │
│   zum Kupplungsan-           │
│   sprechzeitpunkt            │
│   $t_{ansprech}$             │
│   zurückzulegenden           │
│   Kupplungsweg               │
│   $s_{ansprech}$             │
└──────────────────────────────┘
```

```
┌──────────────────────────────┐
│   Ermitteln erste Zeitspanne  │
│   $\Delta t_1$                │
│   aus zu Beginn des Einkuppel-│
│   vorgangs erfasster Einkuppel-│
│   geschwindigkeit $v_{Beginn}$ und │
│   bei vorhergehendem Anfahr-  │
│   vorgang abgespeichertem     │
│   Kupplungsweg $s_{filter}$   │
└──────────────────────────────┘
```

```
┌──────────────────────────────┐
│   Speichern gefilterten       │
│   bis zum Kupplungsan-        │
│   sprechzeitpunkt            │
│   $t_{ansprech}$             │
│   zurückzulegenden           │
│   Kupplungsweg               │
│   $s_{filter}$               │
└──────────────────────────────┘
```

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2376990 A